# EUROPÄISCHE PATENTANMELDUNG

(11) **EP 2 626 754 A1**
(43) Veröffentlichungstag der Anmeldung: **14.08.2013**
(21) Anmeldenummer: 12154145.2
(22) Anmeldetag: 07.02.2012
(51) Int. Cl.: G05B 17/02

(54) **Simulationsumgebung für eine Gebäudeautomation**

(71) Anmelder: GfR - Gesellschaft für Regelungstechnik und Energieneinsparung mbH, 33415 Verl (DE)
(72) Erfinder: Westerheide, Volker, 32791 Lage (DE); Sokollik, Frank, 98704 Oehrenstock (DE); Richter, Andreas, 06246 Delitz am Berge (DE)
(74) Vertreter: Reimann, Silke

(57) **Zusammenfassung**

Die Erfindung bezieht sich auf eine Testanordnung zur Simulation des Verhaltens raumlufttechnischer Anlagen (9) für die Klimatisierung der Räume eines Gebäudes, bei dem die Raumdaten, die Konstruktion der raumlufttechnischen Anlagen und physikalische Umgebungsbedingungen der Räume über Modelle in einen Simulationsrechner (1) eingegeben sind, und in dem Simulationsrechner (1) eine Simulationssoftware ausgeführt wird, wobei in mindestens einem Automatisierungsrechner (5) eine Gebäudeautomatisierungssoftware (6) abläuft, der mit dem Simulationsrechner (1) über ein Netzwerk (4) verbunden ist.

## Beschreibung

Die Erfindung betrifft eine Testanordnung und ein Verfahren zur Simulation des Verhaltens raumlufttechnischer Anlagen für die Klimatisierung der Räume eines Gebäudes, bei der die Raumdaten, die Konstruktion der raumlufttechnischen Anlagen und physikalische Umgebungsbedingungen der Räume über Modelle in einen Simulationsrechner eingegeben sind, und in dem Simulationsrechner eine Simulationssoftware ausgeführt wird.

Vor dem Hintergrund der Umsetzung der europäischen Energieeffizienzrichtlinie für Gebäude nimmt das Thema energieeffizienter Betrieb von Gebäuden einen immer höheren Stellenwert ein. Hierbei kann die Gebäudeautomation einen wichtigen Beitrag liefern, indem z.B. durch Hardware-in-the-Loop (HiL)-Tests das Zusammenspiel zwischen Anlagentechnik, Raumnutzung und entsprechenden Steuerungs-/Regelungskonzepten sowohl bei der Inbetriebnahme als auch im laufenden Betrieb angepasst und optimiert wird.

In der Gebäudeautomation sind oft komplexe Strukturen von raumlufttechnischen Anlagen zu behandeln, die sich mit herkömmlichen Steuerungs- und Regelungsstrategien nicht optimal ansteuern lassen. Hier ist ein Test von verschiedenen Anlagenvarianten inkl. der Steuerungs- und Regelungsstrategie in einem frühen Planungsstadium an Hand von Simulationsmodellen sehr hilfreich.

Ein weiteres Problemfeld liegt in der Inbetriebnahme und damit in der Parametrierung der Anlagensteuerung. Diese finden vor, bzw. während, der Abnahme der Anlage bei einem konkreten Außenklima und den aktuellen Raumlasten statt. Die Realität zeigt, dass diese Parameter im weiteren Betrieb nur selten optimiert werden. Damit werden die Anlagen mit nicht optimal angepassten Parametern betrieben. Die Folge ist ein erheblicher Mehrverbrauch an Energie. Hier kann eine Simulation Aussagen über das Anlagenverhalten in einem Jahresgang liefern, und entsprechend kann eine Optimierung vorgenommen werden.

Damit sind zwei Bereiche genannt, in denen eine Anlagensimulation komplexer Anlagenstrukturen eine hilfreiche Aussage liefern kann.

Im Stand der Technik sind verschiedene Simulationssoftwares bekannt, die eine Simulation von Geräten und Umgebungsbedingungen erlauben. Die meisten haben sich auf die Simulation von Steuermodulen in Automobilen spezialisiert. Dabei können Fahrsituationen simuliert werden. Für die Gebäudeautomatisierung sind nur wenige geeignet.

So ist die Software "ComSol Multipysics" für die Simulation eines Geräteverhaltens unter verschieden Umgebungs- und Lastbedingungen einsetzbar. Dabei können die Hardwaredimensionen und -eigenschaften eines Gerätes sowie Dimensionen der Einsatzumgebung über sogenannte "Live-Links" aus einer CAE-Software übernommen werden. Die Physikalischen Umgebungsparameter der Gebäudeautomation können in der Software modelliert werden.

Diese Software sieht nicht vor, dass ein Automationsrechner über seine Schnittstellen auf die Simulationssoftware zugreift und darüber in seinem Verhalten getestet werden kann.

Mit der Software "Labview" der Firma National Instruments können Geräte an einen Rechner angeschlossen und deren Signale manipuliert oder ausgewertet werden. So ist ein Automationsrechner mit seinen Algorithmen und deren Auswirkungen auf die Geräte simulierbar. Physikalische Umgebungsparameter werden hier nicht erfasst.

Die Software "dyAna" der Firma ADIC Systems modelliert das instationäre Wärme- und Feuchte-Verhalten für Räume und Gebäude bei Kenntnis der den Raum umschließenden Konstruktionen. Dabei werden das reale Klima am Standort des Gebäudes, die Lage und Geometrie des Objektes, die verwendeten Materialien aller Bauteile, das Nutzerverhalten, die technische Gebäudeausrüstung und die thermodynamische Erdreich-Bauwerk-Interaktion berücksichtigt. Die Geometrien können dabei aus CAE-Daten übernommen werden. Der Einsatz von Hardware-in-the-Loop Komponenten ist nicht vorgesehen. Somit ist ein automatischer Test des Automationsrechners nicht möglich.

Die Software "virtuos" der Firma ITI GmbH erstellt virtuelle Maschinen und Anlagen. Dabei kann sowohl ein Automatisierungsrechner als auch eine zu steuernde Anlage modelliert sein. Der Einsatz von Hardware-in-the-Loop Komponenten ist möglich, da reale Feld- und Antriebsbusse zwischen einer Steuerung und einer Maschine unterstützt werden. Geometrien von Maschinen oder Geräten können aus einer CAE-Software übernommen werden. Es ist aber nicht ersichtlich, dass die Physikalischen Umgebungsparameter einer Gebäudeautomation in der Software berücksichtigt werden können.

In der Gebrauchsmusterschrift DE 20 2010 011 984 U1 ist eine Vorrichtung für das automatische Feintuning der Eingabedaten einer Gebäudeautomation beschrieben. Diese Software ist dafür vorgesehen, dass während des Betriebs eines Gebäudes die Eingabedaten von den technischen Anlagen automatisch nach bestimmten Vorgaben manipuliert werden, bevor diese an die Steuerung der Gebäudeautomation weitergegeben werden. Darüber soll eine weitere Energieoptimierung ermöglicht werden sowie die Berücksichtigung von "weichen" Anforderungen, die nicht identisch mit physikalischen Größen sind. Für die hier vorzunehmende Manipulation der realen Daten wird ein Rechner vorgesehen, der das Gebäudeverhalten simuliert. Diese Software ist nicht geeignet, vor der Fertigstellung eines Gebäudes verschiedene Klimaprofile zu überprüfen und die Automationssoftware vorher für die Vor-Ort-Bedingungen zuoptimieren.

Es ist die Aufgabe der Erfindung, eine Testanordnung und ein Verfahren zur Simulation des Verhaltens raumlufttechnischer Anlagen für die Klimatisierung der Räume eines Gebäudes anzugeben, die es erlaubt, Gebäudeautomationssoftware und reale raumlufttechnische Anlagen sowie deren Modelle vor der Inbetriebnahme mit Klimamodellen zu simulieren und zu testen.

Gelöst wird diese Aufgabe durch die Testanordnung gemäß Anspruch 1 und das Verfahren nach Anspruch 9.

Vorteilhafte Ausgestaltungen der Erfindung sind in den abhängigen Ansprüchen beschrieben.

Die erfindungsgemäße Testanordnung ist zur Simulation des Verhaltens raumlufttechnischer Anlagen für die Klimatisierung der Räume eines Gebäudes vorgesehen. Dabei werden die Raumdaten, die Konstruktion der raumlufttechnischen Anlagen und die physikalischen Umgebungsbedingungen der Räume über Modelle in einen Simulationsrechner eingegeben, in dem eine Simulationssoftware ausgeführt wird.

Dabei ist der Simulationsrechner mit mindestens einen Automatisierungsrechner über ein Netzwerk verbunden, in dem eine Gebäudeautomatisierungssoftware abläuft. Mit einer solchen Testanordnung lässt sich das Klimaverhalten von Räumen bei einer Steuerung raumlufttechnischer Anlagen durch eine Gebäudeautomationssoftware simulieren. Dabei können die Parameter solcher Anlagen, wie Größe, Konfiguration oder Luftmengen, variiert werden, ohne dass jeweils eine Anlage aufgebaut und in dem entsprechenden Raum betrieben werden muss.

Das Verhalten der Gebäudeautomationssoftware lässt sich vor einer Installation und Inbetriebnahme der Anlagen in einem Gebäude testen und optimieren. Durch den Einsatz eines realen Automatisierungsrechners läuft die Automatisierungssoftware in ihrer vorgesehen Umgebung und wird nicht simuliert. Damit entspricht das Laufzeitverhalten der Gebäudeautomationssoftware den realenspäteren Bedingungen. Verfälschungen durch eine Simulation des Automatisierungsrechners treten nicht auf.

Die raumlufttechnischen Anlagen sind dabei elektronisch gesteuerte Klimageräte, Ventilatoren, Filter, Luftbefeuchter oder Luftentfeuchter, Lufterhitzer, Luftkühler, Energierückgewinner, Pumpen, Mischer, Luftkanäle oder Luftklappen und ähnliches. Diese

Anlagen besitzen Sensoren und Aktoren, die von der Gebäudeautomationssoftware ausgewertet oder eingestellt werden. Dabei entsprechen die in den Simulationsrechner eingestellten Modelle den realen Anlagen bei den für die Simulation relevanten Parametern.

Die Kommunikation zwischen Simulationsrechner und Automatisierungsrechner erfolgt über das Netzwerk, das nach einem Schichtenmodell organisiert ist. Dies ist etwa das OSI-7-Schichtenmodell, dessen unterste Schicht die physikalischen Eigenschaften der Schnittstelle beschreiben. Dabei entsprechen die entsprechenden Schichten vorteilhaft einem CAN-Bus, Ethernet, LonTalk oder BACnet/IP. Dies sind die in der Gebäudeautomation verbreiteten Schnittstellen. Damit lassen sich dann auch Anlagen unterschiedlicher Hersteller in das Anlagenkonzept der Gebäudeautomation einbinden.

Der Simulationsrechner besteht vorteilhaft aus einen Simulationsserver und einem oder mehreren Simulationsclients. Dabei können der Simulationsserver und ein Simulationsclient auch auf einer Rechnerhardware gemeinsam installiert sein. Dieses Client-Server-Prinzip erlaubt eine simultane Simulation in verschiednen Testanordnungen, wobei auf den Clients jeweils unterschiedliche Simulationssoftware ablaufen kann. Dabei sind die Modelle der raumlufttechnischen Anlagen sowie die Raum- und Umweltmodelle einheitlich im Simulationsrechner abgelegt.

Die Testumgebung erlaubt es auch, dass zusätzlich reale raumlufttechnische Anlagen an einen Automatisierungsrechner angeschlossen sind. Somit ist auch ein gemischter Testbetrieb mit realen und simulierten Raumlufttechnischen Anlagen möglich.

Das Verfahren zur Simulation des Verhaltens raumlufttechnischer Anlagen in Räumen eines Gebäudes nutzt die oben beschriebene Testanordnung. Die Modelle für die Konstruktion raumlufttechnischen Anlagen sowie deren Verbindungen untereinander werden aus einem CAE-System in den Simulationsrechner übernommen. Die physikalischen Umgebungsbedingungen der Räume werden durch dynamische Klimamodelle in dem Simulationsrechner nachgebildet. Alle Modelle werden im Simulationsrechner einheitlich gespeichert und stehen für die Simulationssoftware zur Verfügung.

In jedem Automatisierungsrechner läuft eine Gebäudeautomatisierungssoftware ab, deren Verhalten auf unterschiedliche dynamische Simulationsmodelle der Räume und der Umwelt getestet wird. So kann die Gebäudeautomationssoftware vor der Inbetriebnahme mit Simulationsmodellen getestet werden.

Die Modelle der raumlufttechnischen Anlagen und die Raummodelle für die Simulation sind über Parameterdateien veränderbar und so können der Gebäudeautomationssoftware unterschiedliche Bedingungen durch die Simulationssoftware vorgegeben und deren Reaktionen getestet werden, ohne dass eine reale Umgebung vorhanden sein muss.

In der Simulationssoftware werden die Abhängigkeiten und die Verbindungen der raumlufttechnischen Anlagen vorteilhaft durch eine Struktur von Knoten, Zweigen und Maschen beschrieben, die Luftströmungen nachbilden. Dabei bilden die Elemente der raumlufttechnischen Anlagen Strömungswiderstände. Übergänge zum Raum oder der Umwelt werden ebenfalls durch entsprechende Zweige mit Strömungswiderständen beschrieben.

Die Simulation des Verhaltens der raumlufttechnischer Anlagen eines Raumes wird durch die Lösung von Differentialgleichungssystemen durchgeführt, die aus den Modellen und den Parameterdateien abgeleitet werden. Dabei wird jede raumlufttechnische Anlage durch ein eigenes Differentialgleichungssystem nachgebildet. Die Nachbildung wird durch einen Luftstrom, beschrieben durch den Massenstrom der trockenen Luft, den Feuchtegehalt und einen Energiestrom bestimmt. Daraus leiten sich die dynamischen Bilanzgleichungen der Luft für Feuchte und Energie ab. Weiterhin werden daran ein Luftbehandlungsprozess und ein Gehäusemodell gekoppelt. Die Parameter der Modelle sind in Parameterdateien abgelegt, die im Test variierbar sind.

Die Nachbildung führt zu einem lokalen Differentialgleichungssystem, bestehend aus drei oder mehr Gleichungen. In Abhängigkeit von der Gestaltung des Gehäusemodells und der Parameter kann sich die Anzahl der Gleichungen weiter erhöhen.

Durch die Verknüpfung der einzelnen lokalen Differentialgleichungssysteme in der Struktur aus Maschen und Knoten wird ein umfassendes Differentialgleichungssystem gebildet, dessen Lösung das Verhalten der Raumluftzustände sowie der Luftzustände in der raumlufttechnischen Anlage angibt.

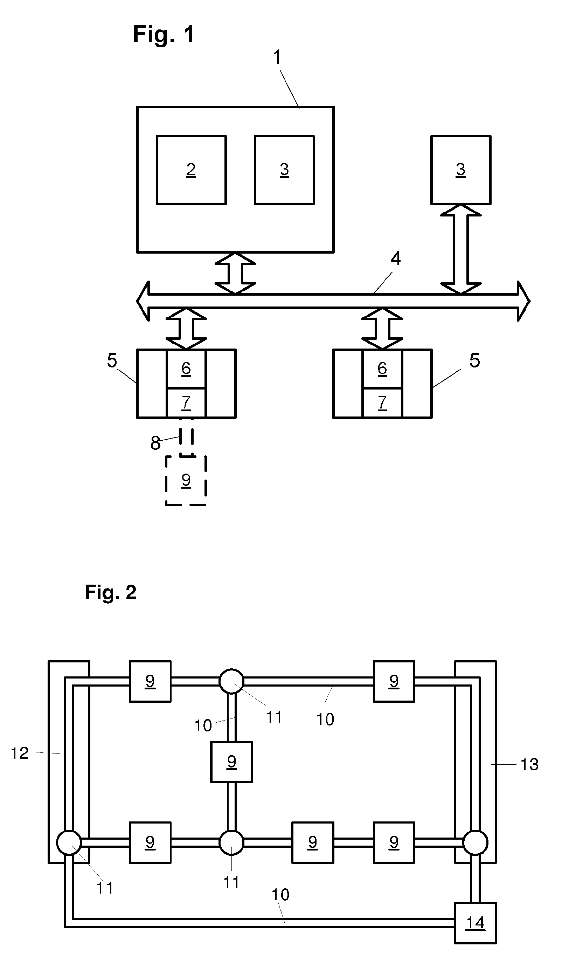

In den Figuren sind die Testanordnung in Fig. 1 und ein Simulationsmodell in Fig. 2 beispielhaft dargestellt.

Fig. 1 zeigt eine Testanordnung mit einem Simulationsrechner 1, der einen Simulationsserver 2 und einen Simulationsclient 3 enthält, sowie einen weiteren Simulationsclient 3. Über das Netzwerk 4 sind die Simulationsclients 3 mit den Automationsrechnern 5 verbunden. In den Simulationsclients 3 sind die aktuellen Modelle der zu simulierenden Anlagen und Umgebungsbedingungen mit den zugehörigen Parameterdateien gespeichert.

In den Automationsrechnern 5 läuft eine Gebäudeautomationssoftware 6 ab, die mit den Simulationsclients 3 über das Netzwerk 4 kommuniziert. In einer solchen Testanordnung ist der Test der Gebäudeautomationssoftware 6 und deren Inbetriebnahme in einer simulierten Umgebung möglich. Optional sind reale raumlufttechnische Anlagen 9 über die elektrische Schnittstelle 8 und die zugehörigen Schnittstellentreiber 7 an die Automationsrechnern 5 angeschlossen.

In Fig. 2 ist ein Simulationsmodell für eine Testumgebung dargestellt. Die Elemente raumlufttechnischen Anlagen 9 sind in ein Netz von Zweigen 10 und Knoten 11 eingebunden, das mit Modellen für die Umwelt 12 und den Raum 13 verbunden ist. Dabei stellen die raumlufttechnischen Anlagen 9 Strömungswiderstände dar, die auf einem Zweig 10 angeordnet sind. Ein Zweig 10, der einen Luftstrom repräsentiert, beginnt und endet an einem Knoten 11. Ein Knoten 11 repräsentiert eine Stromverzweigung von mindestens drei angeschlossenen Zweigen 10. Ist ein Zweig 10 nicht beidseitig durch einen Knoten 11 begrenzt, liegt eine Quelle oder eine Senke vor.

Das Simulationsmodell sieht eine Zone 12 für die Umwelt und eine Zone 13 für den Raum vor. Alle Zweige 10, die diese Zonen durchdringen, sind mit einem Knoten 11 verbunden.

Da der Raum eine gewisse Undichtigkeit zu der Umwelt besitzt, wird ein weiterer Zweig 10 mit einem Strömungswiderstand 14 hinzugefügt. Darüber lassen sich Luftströme an die und von der Umwelt abbilden.

Aus den Knoten 11 und Maschen 10 wird ein System unabhängiger Differentialgleichungen erstellt, dessen Lösung etwa durch ein erweitertes Newton-Verfahren erfolgt. Mit einem solchen Simulationsmodell sind die raumlufttechnischen Anlagen 9 auch vor ihrer tatsächlichen Installation in einem Raum testbar.

Versuche haben gezeigt, dass mit einem solchen Simulationsmodell das Verhalten der Anlagen quasi in Echtzeit dargestellt werden kann.

### Bezugszeichen

- 1: Simulationsrechner
- 2: Simulationsserver
- 3: Simulationsclient
- 4: Netzwerk
- 5: Automationsrechner
- 6: Gebäudeautomationssoftware
- 7: Schnittstellentreiber
- 8: Elektronische Schnittstelle
- 9: Raumlufttechnische Anlage
- 10: Zweig
- 11: Knoten
- 12: Umweltzone
- 13: Raumzone
- 14: Strömungswiderstand

## Patentansprüche

1. Testanordnung zur Simulation des Verhaltens raumlufttechnischer Anlagen (9) für die Klimatisierung der Räume eines Gebäudes, bei dem die Raumdaten, die Konstruktion der raumlufttechnischen Anlagen und physikalische Umgebungsbedingungen der Räume über Modelle in einen Simulationsrechner (1) eingegeben sind, und in dem Simulationsrechner (1) eine Simulationssoftware ausgeführt wird,
**dadurch gekennzeichnet, dass**
in mindestens einem Automatisierungsrechner (5) eine Gebäudeautomatisierungssoftware (6) abläuft, der mit dem Simulationsrechner (1) über ein Netzwerk (4) verbunden ist.

2. Testanordnung nach Anspruch 1, **dadurch gekennzeichnet, dass** die raumlufttechnischen Anlagen (9) elektronisch gesteuerte Klimageräte, Ventilatoren, Filter, Luftbefeuchter oder Luftentfeuchter, Lufterhitzer, Luftkühler, Energierückgewinner, Pumpen, Mischer, Luftkanäle oder Luftklappen sind.

3. Testanordnung nach Anspruch 1, **dadurch gekennzeichnet, dass** die Kommunikation zwischen dem Simulationsrechner (1) und dem Automatisierungsrechner (6) über das Netzwerk (4) nach einem Schichtenmodell organisiert ist.

4. Testanordnung nach Anspruch 3, **dadurch gekennzeichnet, dass** die entsprechenden Schichten einem CAN-Bus, Ethernet, LonTalk oder BACnet/IP entsprechen.

5. Testanordnung nach Anspruch 1, **dadurch gekennzeichnet, dass** der Simulationsrechner (1) einen Simulationsserver (2) und einen oder mehrere Simulationsclients (3) enthält.

6. Testanordnung nach Anspruch 6, **dadurch gekennzeichnet, dass** Simulationsclients (3) auf im Netzwerk (4) verteilten Rechnern installiert sind.

7. Testanordnung nach Anspruch 1, **dadurch gekennzeichnet, dass** die Modelle der raumlufttechnischen Anlagen (9) und die Raum- und Umweltmodelle einheitlich im Simulationsrechner (1) abgelegt sind.

8. Testanordnung nach Anspruch 1, **dadurch gekennzeichnet, dass** an den Automatisierungsrechner (6) zusätzlich reale raumlufttechnische Anlagen (9) angeschlossen sind.

9. Verfahren zur Simulation des Verhaltens raumlufttechnischer Anlagen (9) in Räumen eines Gebäudes, mit einer Testanordnung gemäß Anspruch 1, bei dem die Modelle für die Raumdaten und die Konstruktion der raumlufttechnischen Anlagen (9) sowie deren Verbindungen untereinander aus einem CAE-System in den Simulationsrechner (1) übernommen werden und die physikalischen Umgebungsbedingungen der Räume durch dynamische Klimamodelle in dem Simulationsrechner (1) nachgebildet werden, **dadurch gekennzeichnet, dass**
in jedem Automatisierungsrechner (5) eine Gebäudeautomatisierungssoftware (6) abläuft, deren Verhalten auf unterschiedliche dynamische Simulationsmodelle der Räume und der Umwelt getestet wird.

10. Verfahren nach Anspruch 9, **dadurch gekennzeichnet, dass**
die Modelle der raumlufttechnischen Anlagen (9) und die Raum- und Umweltmodelle für die Simulation über Parameterdateien angepasst werden.

11. Verfahren nach Anspruch 9, **dadurch gekennzeichnet, dass**
die Luftströmungen durch die raumlufttechnischen Anlagen mit ihren Strömungswiderständen in der Simulationssoftware mit ihren Verbindungen durch eine Struktur von Knoten (11), Zweigen (10) und Maschen beschrieben wird.

12. Verfahren nach Anspruch 11, **dadurch gekennzeichnet, dass** Übergänge zum Raum oder der Umwelt in der Simulationssoftware durch entsprechende Zweige (10) mit Strömungswiderständen (14) beschrieben werden.

13. Verfahren nach Anspruch 10, **dadurch gekennzeichnet, dass** die Simulation des Verhaltens der raumlufttechnischer Anlagen (9) eines Raumes durch die Lösung von Differentialgleichungssystemen durchgeführt wird, die aus den Modellen und den Parameterdateien abgeleitet werden.

14. Verfahren nach Anspruch 13, **dadurch gekennzeichnet, dass** für die Simulation dynamische Bilanzgleichungen verwendet werden.
